# EUROPEAN PATENT APPLICATION

(11) **EP 4 450 599 A2**
(43) Date of publication of application: **23.10.2024**
(21) Application number: 24186282.0
(22) Date of filing: 09.02.2016
(51) Int. Cl.: C10G 3/00

(54) **METHOD FOR PRODUCING HYDROCARBONS FROM A RENEWABLE OIL FEEDSTOCK**

(30) Priority: 09.02.2015 FI 20150044
(62) Divisional of application: 16705216.6
(71) Applicant: Neste Oyj, 02150 Espoo (FI)
(72) Inventor: LINDQVIST, Petri, 06101 Porvoo (FI); LEHTIMAA, Tuula, 06101 Porvoo (FI); SIPPOLA, Väinö, 06101 Porvoo (FI); LEHTINEN, Olli-Pekka, 06101 Porvoo (FI); FAAIJ, Gerard, Schoonhoven (NL)
(74) Representative: Espatent Oy

(57) **Abstract**

This invention relates to the field of renewable oil compositions and especially to the use of renewable oil compositions for production of hydrocarbon compositions, which can be used for traffic fuels and other solutions. Especially, the current invention relates to a composition comprising free fatty acids and triglycerides, in a concentration of free fatty acids from 15 wt-% to 50 wt-% and the rest being predominantly triglycerides. The invention relates also to a method for producing hydrocarbons from a renewable oil feedstock, in which the feedstock comprising free fatty acids from 15 wt-% to 50 wt-%, and the rest being predominantly triglycerides is subjected to a pretreatment process followed by a hydrotreatment process for obtaining hydrocarbons.

## Description

### BACKGROUND

This invention relates to the field of renewable oil compositions and especially to the use of renewable oil compositions for production of hydrocarbon compositions, which can be used for traffic fuels and other solutions. In particular the invention relates to the use of renewable oil compositions in hydrotreatment processes, such as hydrodeoxygenation, to produce straight chain paraffinic compositions (n-paraffins).

Today liquid fuel components are mainly based on crude oil. There is an ever growing demand for liquid fuels with lower CO₂ emissions compared to crude oil based fuels. Various renewable sources have been used as alternatives for crude oil fuels. One of the most promising and most developed methods is hydrogenation of vegetable oil (HVO) or animal fats to produce paraffins, which can further be refined, e.g. through isomerisation reactions to renewable diesel with excellent properties.

Vegetable oils and animal based fats can be processed to decompose the ester and/or fatty acid structure and to saturate the double bonds of the hydrocarbon backbone thus obtaining about 80 - 85 % of n-paraffins relative to the mass of the starting material. This product can be directly used as a middle distillate fuel component or the cold flow properties of n-paraffins can be enhanced in an isomerisation step where iso-paraffins are formed. A method of producing iso-paraffins from vegetable oils and animal fats is presented in publication EP1396531.

Vegetable oils and animal fats (renewable oils) mainly consist of triacylglycerides or triglycerides and fatty acids. Triglycerides have a glycerol backbone to which three fatty acids are linked through an ester bond. Carbon chain length of natural fatty acids is typically between C₄ to C₂₂. Generally, C₁₈ is the most common. In addition, fatty acids can have up to 20 % of unsaturated double bonds and the location of these may vary. Triglycerides can be readily hydrolyzed to fatty acids acid either in chemical processes, during the treatment of the natural oil or in nature. Therefore, all industrially available natural oils contain mixtures of tri-, di-, monoglycerides and free fatty acids. Typically, a small amount of water is also present. Triglycerides can also be transesterified to obtain alkylesters such as fatty acid methyl ester (FAME) which can be used as biodiesel. Common for all naturally occurring fatty acids is the hydrocarbon chain, which can be used to produce hydrocarbons e.g. through hydrodeoxygenation processes.

Non-esterified fatty acids or so called free fatty acids have very little industrial or food applications. Instead, the streams containing high amounts of free fatty acids are usually considered waste streams. However, the hydrocarbon backbone of the free fatty acids is as useful as hydrocarbon source as the hydrocarbon chain of triglycerides. There is therefore an incentive for increased use of streams containing free fatty acids in production of renewable hydrocarbon compositions, e.g. in traffic fuel applications. Especially the production of renewable fuels would like to find non-food biological sources both for sustainability and political reasons.

However, there are technical limitations to the industrial use of streams containing high amounts of free fatty acids. The free fatty acids are more corrosive compared to the esterified components and there are also limitations to the pretreatment or purification processes when using compositions comprising both glycerides and free fatty acids. This invention provides a solution to the limitations of the use of compositions comprising mainly triglycerides and free fatty acids, especially in hydrodeoxygenation processes for production of hydrocarbon compositions.

### SUMMARY OF THE INVENTION

It has been discovered that a concentration of over 10 wt-% free fatty acids (FFA) and the rest being predominantly triglycerides causes problems in pretreatment in form of poor filterability. Without being bound to a theory, in a composition containing more than 10 wt-% FFA and the rest predominantly triglycerides, agglomerates or particles clogging filters are formed. These problems are typically present when said composition contains surfactant-like impurities. Also, the presence of water has been found to promote formation of particles and/or agglomerates.

Thereby the current invention relates to a method for producing hydrocarbons from a renewable oil feedstock, comprising the steps of
- subjecting the feedstock to a pretreatment process,
- subjecting said pretreated feedstock to a hydrotreatment process,
- obtaining hydrocarbons from said hydrotreatment process,
wherein said feedstock comprises free fatty acids from 15 wt-% to 80 wt-% of the total feedstock weight, and the rest being predominantly triglycerides. It has been surprisingly found that for such a feedstock, the mechanical pretreatment processes may be performed avoiding problems caused by liquid crystals and agglomerates formed in said feedstock.

Preferably the hydrocarbons obtained from said hydrotreatment process are predominantly straight chain paraffinic compositions (n-paraffins) wherein minor amount of side products is present. Said paraffins may be further processed, for example isomerized.

The experiments herein conducted show how particle size grows almost linearly as percentage of fatty acids is increased up to 10 wt-%. Surprisingly it was found that at an even higher percentage of FFA, the problem related to agglomerates seems to diminish, especially if the concentration of FFA is over 15 wt-%. Thereby, a FFA concentration from 15 wt-% to 80 wt-% does not have liquid crystal or agglomerate related problems of poor filterability. Both experimental settings confirmed that when FFA percentage was raised above 20 wt-%, the occurrence of large particles or agglomerates decreased radically, hence a FFA concentration of from 20 wt-% to 80 wt-% has shown characteristics providing good filterability under all studied conditions.

FFA increases the corrosiveness of the feed, which can be handled with e.g. suitable material choices. However, at concentrations up to 50 wt-% the corrosion effect by FFA is tolerable at normal process conditions. Therefore, FFA concentration from 20 wt-% to 50 wt-% is particularly preferable in embodiments wherein corrosion needs to be taken into account.

Renewable oil feedstock of natural oils contains mixtures of tri-, di-, monoglycerides and free fatty acids. Such feedstocks are typically composed of vegetable oil or animal fat providing predominantly triglycerides, but also di-and monoglycerides and free fatty acids, wherein small amounts or traces of water and other impurities are present.

Vegetable oil refers to oils retrievable from any vegetation, wild or cultivated, including but not restricted to wood, crops, nuts, fruits, seeds, kernels etc. Examples of suitable materials are wood-based and other plant-based and vegetable-based fats and oils such as rapeseed oil, colza oil, canola oil, tall oil, sunflower oil, soybean oil, hempseed oil, olive oil, linseed oil, mustard oil, palm oil, peanut oil, castor oil, coconut oil, as well as fats contained in plants bred by means of gene manipulation, animal-based fats such as lard, tallow, train oil, and fats contained in milk, as well as recycled fats of the food industry and mixtures of the above.

Oils and fat suitable as feedstock may comprise C₁₂-C₂₄ fatty acids, derivatives thereof such as anhydrides or esters of fatty acids as well as triglycerides of fatty acids or combinations of thereof. Fatty acids may be produced via hydrolysis of oils or fats or by their fractionalization, or reactions of triglycerides.

Renewable oil feedstock may be pretreated with suitable methods such as biologically, chemically, and physically prior to the hydrodeoxygenation (HDO) step that breaks the structure thereof. The present method provides benefits in physical pretreatment processes, such as sieving, filtering, decanting etc. Preferably the pretreatment according to the invention is any process including filtration. Especially the pretreatment is a purification process for removing impurities such as phospholipids, metals and solids.

HDO means removal of oxygen by means of hydrogen, that is, oxygen is removed while the structure of the material cut. Olefinic double bonds are hydrogenated, and optional sulphur and nitrogen compounds are removed. Pretreatment and purity of the raw materials contribute to the service life of the HDO catalyst.

The pretreated feedstock can be subjected to any suitable hydrotreatment process requiring a purification step before introductions to the catalytic process. Especially the hydrotreatment process is a catalytic hydrodeoxygenation process using a metal catalyst selected from the group consisting of Fe, Pd, Pt, Ni, Mo, Co, Ru, Rh, W and any combination thereof, and optionally supported on a support selected from alumina, silica and active carbon.

The current invention is suitable for any mixture of vegetable oil, animal fat and a free fatty acid stream. The FFA stream can e.g. be selected from palm fatty acid distillate (PFAD), sludge palm oil (SPO), crude tall oil (CTO), crude fatty oil (CFO), tall oil fatty acid (TOFA), acid oils, free fatty acid side streams from oleochemistry, lauric fatty acid, palm kernel fatty acid, brown grease and any mixture thereof, but the invention is not limited to the use of these FFA streams.

Another embodiment of the current invention is a composition comprising free fatty acids and triglycerides, wherein the concentration of free fatty acids is from 15 wt-% to 80 wt-%, preferably from 20 wt-% to 80 wt-% and the rest being predominantly triglycerides. Preferably the triglycerides of said composition are triglycerides from natural oils, more specifically vegetable oils, animal fats or mixtures thereof.

Yet another embodiment of the current invention is the use of renewable oil in a hydrotreatment process for producing hydrocarbons, wherein the feed for the process contains free fatty acids from 15 wt-% to 80 wt-% and the rest is predominantly triglycerides, wherein a pretreatment is performed before said hydrotreatment process. The pretreatment process preferably comprises a filtration. Hydrocarbons thereby produced are preferably paraffinic.

Preferred embodiments are listed in the attached claims but the invention is not limited to these specific embodiments. The person of ordinary skill understands from this description how this invention can be put into use.

Embodiments of the present invention are next described as numbered items.
1. A method for producing hydrocarbons from a renewable oil feedstock, comprising the steps of
   - subjecting the feedstock to a pretreatment process,
   - subjecting said pretreated feedstock to a hydrotreatment process,
   - obtaining hydrocarbons from said hydrotreatment process,
   wherein said feedstock comprises free fatty acids from 15 wt-% to 80 wt-% of the total feedstock weight, preferably from 20 wt-% to 80 %-wt, and the rest being predominantly triglycerides.
2. The method according to item 1, wherein said feedstock comprises free fatty acids from 20 wt-% to 50 wt-%, of the total feedstock weight, and the rest being predominantly triglycerides.
3. The method according to item 1, wherein said feedstock comprises free fatty acids from 50 wt-% to 80 wt-%, of the total feedstock weight, and the rest being predominantly triglycerides.
4. The method according to any of the preceding items, wherein said pretreatment process comprises a filtration step.
5. The method according to any of the preceding items, wherein said pretreatment process is a purification process for removing impurities such as phospholipids, metals and solids.
6. The method according to any of the preceding items, wherein said hydrotreatment process is a catalytic hydrodeoxygenation process using a metal catalyst wherein said metal is selected from the group consisting of Fe, Pd, Pt, Ni, Mo, Co, Ru, Rh, W and any combination thereof, and optionally supported on a support selected from alumina, silica and active carbon.
7. The method according to any of the preceding items, wherein said feedstock is a mixture comprising
   - vegetable oil, animal fat or a mixture thereof, and
   - a free fatty acid stream selected from palm fatty acid distillate (PFAD), sludge palm oil (SPO), crude tall oil (CTO), crude fatty oil (CFO), tall oil fatty acid (TOFA), acid oils, free fatty acid side streams from oleochemistry, lauric fatty acid, palm kernel fatty acid, brown grease, and any mixture thereof.
8. A composition comprising free fatty acids and triglycerides, wherein the concentration of free fatty acids is from 15 wt-% to 80 wt-%, preferably from 20 to 80 %-wt, of the total feedstock weight and the rest being predominantly triglycerides.
9. The composition according to item 8, wherein
   - said triglyceride source is selected from vegetable oil, animal fat or a mixture thereof, and
   - said fatty acid source is selected from palm fatty acid distillate (PFAD), sludge palm oil (SPO), crude tall oil (CTO), crude fatty oil (CFO), tall oil fatty acid (TOFA), acid oils, free fatty acid side streams from oleochemistry, lauric fatty acid, palm kernel fatty acid, brown grease, and any mixture thereof.
10. Use of renewable oil in a hydrotreatment process for producing hydrocarbons, wherein said renewable oil contains free fatty acids from 15 wt-% to 80 wt-%, preferably from 20 to 80 %-wt, of the total feedstock weight and the rest is predominantly triglycerides, wherein said hydrotreatment process includes a pretreatment process.
11. The use according to item 10, wherein said pretreatment process comprises a filtration step.
12. The use according to item 10 or 11, wherein said pretreatment is a purification process for removing impurities such as phospholipids, metals and solids.

FFA are preferred feedstock in production of renewable fuel, and other applications, due to their waste status and cheaper price. Streams containing high amounts of FFA have very few, if any, other applications. Especially the food industry, which is the biggest user of vegetable oils and animal fats, does not tolerate FFA.

The use of FFA instead of triglycerides in hydrotreatment processes for production of hydrocarbons compositions reduces the consumption of hydrogen. Since the free fatty acid does not contain the glycerine backbone the stoichiometric consumption of hydrogen in the deoxygenation reaction is lower compared to deoxygenation of triglycerides, where propane is formed. Hydrogen availability and over-all consumption plays a significant role in the economics of hydrodeoxygenation processes. Therefore, according to preferred embodiments, a feedstock comprises free fatty acids from 50 %-wt up to 80 %-wt.

The invented method provides possibilities to use mixtures of FFA with triglycerides without problems in pretreatment process. Otherwise, it would be necessary to build separate pretreatment procedures for the FFA and triglyceride stream. The current invention enables combined pretreatment processes for FFA and triglyceride mixtures.

All percentages given in the present description and claims are weight percentages of the total mass of the relevant flow. For example, when referring to wt-% of the feedstock, the percentage refers to total mass of said feedstock. The expression "predominantly" or "mainly" refers to the most abundant component and the presence of optionally other component or components as minor or trace amounts.

### BRIEF DESCRIPTION OF THE DRAWINGS

The invention will now be described, by way of examples, with reference to the accompanying drawings, in which:
Figure. 1a shows the particle size distribution at PFAD concentration 40.0 wt-% in rapeseed oil according to example 1. The average particle size is approximately 100 nm and clear majority of particles are small.
Figure 1b shows as comparison, the particle size distribution at PFAD concentration 10.0 wt-% in rapeseed oil.
Figure 2a and 2b illustrate liquid crystal structures that were observed to form in rapeseed oil after mixing with varying percentages of lecithin or PFAD in example 1.
Figure 3 gives absorbances (TCNQ method) and observed micellar structures (SAXS) in purified rapeseed oil and oleic acid mixtures with 1.0 wt.-% added lecithin with varying water contents at 25°C.

### DETAILED DESCRIPTION

The surface activity of different compounds in purification (mainly phospholipids and FFAs) and the properties of their liquid crystal structures reveal why problems may occur in physical pretreatment. The properties reported in the experimental partwere related to the size and shape of the liquid crystals (i.e. reversed micelle, tubular or hexagonal structures).

Micelles and aggregates formed by amphiphilic structures in fats and oils may be determined measuring for example particle size, droplet distribution and critical micelle concentration (CMC) analyses. In this study, methods of interest included different particle size analyzers, imaging methods as well as CMC analyses.

Factors effecting the processing of renewable oil feedstock, especially in relation to physical pretreatment processes were studied by two experiments. In example 1 the particle size distribution and particle and agglomerate shapes were assessed. In particular, the free fatty acid content was varied in relation to total feedstock weight. The roles of water and surface active agents within the mixture of free fatty acids and triglycerides were studied as well. Example 2 studies the presence of micelles at varying FFA %-wt as detected with a TCNQ method.

### EXAMPLE 1

Micellar structures in oil were measured by Malvern Zetasizer Nano ZS90 (Malvern Instruments Ltd., Worcestershire, UK) and JEOL-Transmission Electron Microscopy (cryo-TEM) (JEOL, Tokyo, Japan).

The sample size was according to instrument standard,1.2 ml. The measurements were conducted at 60 °C. Results were obtained as particle size distributions from which different populations were identified. Thereby the particles in the reference sample, the background, was taken into consideration. Sample requirements were met :(1) dispersant should be transparent, (2) refractive index of dispersant should be different from particles, (3) refractive index and viscosity of dispersant should be known with an accuracy better than 0.5 %, (4) dispersant should be compatible with particles (i.e. not cause swelling, dissolution or aggregation) and (5) it should be clean and filterable. However, measurements are sensitive to the presence of large particles, aggregates and dust.

Cryo-TEM was used for imaging the shape of micellar structures in oil. Measurements showed that the cryogenic samples were sensitive to ice contamination as they easily adsorb humidity from the surrounding air. The humidity formed easily water crystals interfering with the actual sample structures (seen as dark spots in the image).

First the particle sizes of different surfactants (phospholipids and FFAs) in oil were measured to get indication of their amphiphilicity and the size of liquid crystal structures. The presence and shape of different structures was confirmed using a cryo-TEM-imaging method explained above.

All materials used were commercially available. Food grade rapeseed oil (Mildola Oy, Kirkkonummi, Finland) was used as the triglyceride source and the basis for all samples because of its availability. Granular L-alpha-lecithin (Acros Organics, New Jersey, USA) was used as a phospholipid sample. Lecithin mostly consists of hydratable phosphatidyl choline. Palm fatty acid distillate (PFAD) (Neste Oil Oyj, Porvoo, Finland), consisting 86 % of FFAs, was used as a FFA sample. PFAD was especially suitable for this purpose due to its use as a direct feedstock for renewable diesel production.

All samples contained some moisture. As water may have significant effect on particle size of micellar structures, the moisture contents of all samples were determined using a Sartorius electronic moisture analyzer MA150 (Sartorius AG, Göttingen, Germany) and the results were taken into account in the experimental design. Moisture contents were 0.6 wt.-% and 1.4 wt.-% for rapeseed oil and lecithin, respectively. Moisture content of PFAD was 0.02 % and it was considered as zero.

Sample preparation was done by mixing the ingredients together in a glass container. The aim was to form homogenous and fully diluted samples with clear appearance. Lecithin was difficult to dissolve in oil due to its granular shape. Thus, it was first dissolved in 18 g n-heptane which was then mixed with oil. After this, all n-heptane and moisture from the oil-lecithin mixture was removed using vacuum at 85 °C and ~30 mbar. After this, PFAD was mixed straight to the oil. This was done at 60 °C due to high melting point of PFAD. Finally, distilled water was added into the oil mixture to ensure the needed moisture content and formation of micellar structures. The experimental design and sample preparation is shown below.

Before measurement and imaging, each sample was mixed for 10 seconds using T25 Digital ULTRA-TURRAX^{®} (IKA^{®} Works, Inc., Wilmington, North Carolina, USA) to break down the water droplets. The mixing speed was 7800 rpm. After this, the sample was let to settle for 35 seconds for air bubbles to clear out and micellar structures to form.

The particle size measurements were conducted with different phospholipid and FFA concentrations in rapeseed oil. Additionally, the synergistic properties were determined using both ingredients in the same sample. Phospholipid samples were analyzed at 25 °C while FFA samples were analyzed at 60 °C.

Samples were collected after mixing near the bottom of the container and placed into a disposable sizing cuvette. After this, the particle size distribution of the sample was measured.

Cryo-TEM-samples were prepared by vitrifying them onto Quantifoil 3.5/1 holey carbon copper grids (Quantifoil Micro Tools GmbH, Großlöbichau, Germany) with the hole size of 3.5 µm. Before vitrification, grids were plasma cleaned using Gatan Solarus 9500 plasma cleaner (Gatan, Inc., Pleasanton, California, USA). The vitrification was conducted by transferring samples into an environmental chamber of an automated FEI Vitrobot (FEI, Hillsboro, Oregon, USA). The samples were collected near the top of the container. Images of phospholipid samples were obtained at 25 °C while FFA samples were obtained at 60 °C.

The chamber operated at room temperature and 80 % humidity. The samples were vitrified in a mixture of liquid ethane and propane (1:1) at -180 °C. After this, the grids with the vitrified samples were maintained at liquid nitrogen temperature (-195 °C) and cryo-transferred in to JEOL JEM-3200FSC cryo-Transmission electron microscope (JEOL Ltd., Tokyo, Japan). The microscope operated at 300 kV voltages.

Cryo-TEM-images were taken in bright field mode and using zero loss energy filtering (omega type) with the slit width of 20 eV. Micrographs were recorded using Gatan Ultrascan 4000 CCD camera (Gatan, Inc., Pleasanton, California, USA) and analyzed using Gatan DigitalMicrograph software (Gatan, Inc., Pleasanton, California, USA).

Particle size results were based on intensity size distributions. The distribution was obtained by plotting the intensity of light scattered by particles (%) versus the particle size (nm).

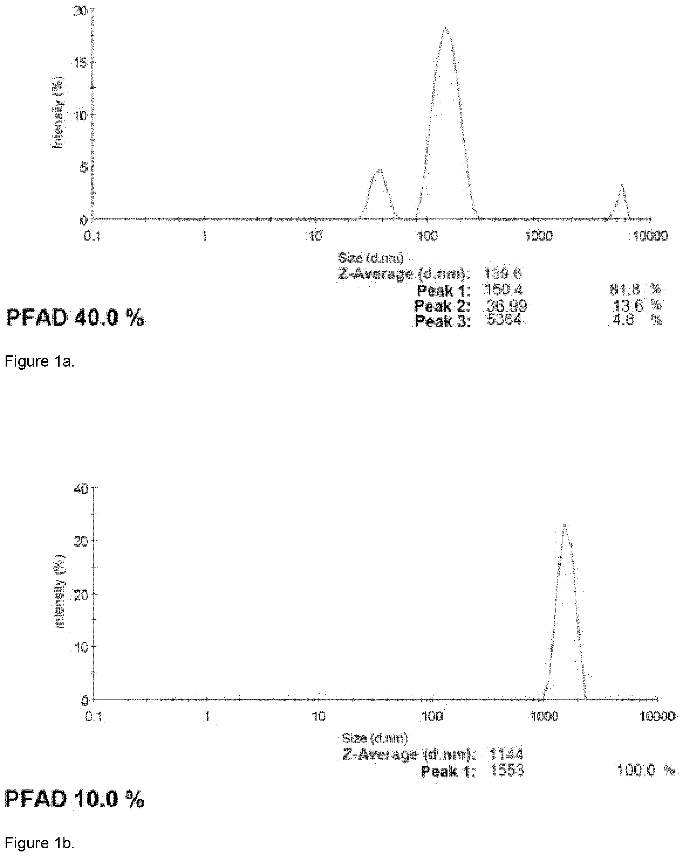

All samples were compared to reference sample (with 0.0 wt.-% added surfactants) where only water at rapeseed oil was present. Particle size of the reference sample was considered as a background measurement and these particles (or peaks in the measurement data) were not taken into account when analyzing higher surfactant concentrations. Background was probably caused by the water droplets or residual surfactants of food grade oil. An example of the particle size distribution results and average size graphs is shown as Figure 1.

### Effect of lecithin concentrations

Increasing lecithin concentration seemed to increase the particle size of oil (results not shown). At low lecithin concentrations (0.0 wt.-% and 0.3 wt.-%), no significant effect on particle size was observed. This was because the particle size stayed relatively stable and only background (particles < 50 nm) was present. At lecithin concentration 1.0 wt.-%, the particle size increased up to -300 nm. After this, the particle size seemed to stay relatively stable with 2.0 wt.-% and 4.0 wt.-% of lecithin (311 nm, and 344 nm, respectively). However, minor populations (5.2 % and 10.9 %, respectively) of very small particles (28 nm and 41 nm, respectively) were seen. These could also be considered as background. At 6.0 wt.-% lecithin there seemed to be a much larger population (56.4 %) of large particles (-1540 nm) present.

### Effect of FFA concentrations

Increasing FFA concentration seemed to have an effect on the particle size in rapeseed oil. However, in this case effect on particle size seemed to be more complex than in the case of lecithin.

The particle size stayed relatively stable at PFAD concentrations 0 wt.-%, 0.3 wt.-% and 1.0 wt.-%. At these concentrations there were two populations present. These populations included a large population (> 95.0 %) of small particles (100-150 nm) and a small population (< 5.0 %) of very large particles (4700-5500 nm). Both populations could be considered as background particles as they were equally present in 0 wt.-% PFAD concentration.

At PFAD 2.5 wt.-%, the number of large population was slightly increased as its intensity increased to 6.7 % when compared to 1.0 wt.-% PFAD. Again, two other populations (peak 1 and 2) were considered as background. At PFAD 5.0 wt.-%, the size of large population seemed to decrease to -2200 nm while their amount increased up to 50.6 %. At PFAD 10.0 wt.-% there was only one population of large particles (-1100 nm). Somewhat similar population was also present at PFAD 20.0 %. However, the average size of particles was higher (-1500 nm).

At PFAD 40.0 wt.-%, the particle size seemed to again change as now there were three populations present. These included two very large populations (13.6 % and 81.8 %) of small particles (30-150 nm) and a very small population (4.6 %) of large particles (-5400 nm). This situation was somewhat similar to low PFAD concentrations (0 wt.-%, 0.3 wt.-% and 1.0 wt.-%). At PFAD 60.0 wt.-% there seemed to be a large population (60 %) of small particles (123 nm) and somewhat smaller population (40 %) of large particles (-2400 nm) present. At PFAD 80.0 wt.-% there were again two populations present. However, the sizes of both populations were now decreased: -990 nm (57.9 %) and ~35 nm (42.1 %). The particle size distribution at PFAD concentration 40.0 wt-% in rapeseed oil is shown as an example of these graphs in Figure 1.

Increasing the PFAD concentration at constant lecithin concentration (0.3 wt.-%) seemed to increase the particle size of the oil (results not shown). At PFAD 0.0 wt.-% there was a single population present which had an average particle size of 159 nm. At PFAD 1.0 wt.-% the average size of the similar population was slightly increased (244 nm). At PFAD 5.0 wt.-% there were two populations present. These included a very large population (97.9 %) of small particles (-300 nm) and a small population (2.1 %) of large particles (-5600 nm). Small particles were considered as background. At PFAD 10.0 wt.-% there were again two populations present: a very small (170 nm) and a very large one (-5100 nm). However, the amount of large particles was much higher (20.7 %) than at PFAD 5.0 wt.-%. At PFAD 20.0 wt.-% the amount of large particles has increased to 48.3 %. However, their average particle size had decreased down to -2400 nm.

The synergistic properties of lecithin and PFAD could be analyzed more closely when comparing the results to selected lecithin and PFAD samples. It was notable that the synergistic particle size results were not similar compared to either lecithin or PFAD samples. For example, at constant lecithin concentration 0.3 wt.-% with 0.0 wt.-% PFAD, the particle size was 158.6 nm while at same lecithin concentration in lecithin samples the particle size was 84.99 nm. This indicates that there was some variation between the two similar sets of samples.

When compared PFAD 5.0 wt.-% at constant lecithin 0.3 wt.-% to PFAD 5.0 wt.-%, it could be observed that the results were not similar. For example in the first measurement there were only two populations present while in the latter there were three populations present. Additionally, the size of these populations seemed not to be close to each other. At both PFAD 10.0 wt.-% and 20.0 wt.-% at constant lecithin content, there seemed to be two populations of particles present (very large and very small). The smaller population might be considered as background. On the other hand, there was only one population present with PFAD 10.0 wt.-% and 20.0 wt.-% without lecithin.

Results from particle size distribution measurements were collected as figures giving said distributions as intensity (%) against particle diameter as logarithmic axis. Figures 1a and 1b are given as examples, 1a with PFAD content of 40 %-wt within the inventive concept and 1b (10 %-wt respectively) as an comparative example. All these figures are not shown here, but the peak intensities, locations as well as calculated average particle size are collected to Table 1. In this table, the trend of increasing particle size along with increasing PFAD concentration can be seen from samples with PFAD concentration from 0.0 to 10.0 %-wt. At 10.0 %-wt, the intensity for large particles was 100 % and average particle size 1553 nm. Against this, the average particle size at 40 %-wt PFAD of about 140 nm is dramatic drop.

**Table 1. Particle size distribution results for different PFAD concentrations. Percentages marked with asterisk* indicate, that there were several peaks of which the two most intense are given here.**

| PFAD (wt-%) | Oil (wt-%) | Water (wt-%) | % small particles | peak (nm) | % large particles | peak (nm) | Z-average |
|---|---|---|---|---|---|---|---|
| 0,00 | 99,10 | 0,90 | 98,90 | 108,40 | 1,10 | 5503,00 | 113,90 |
| 0,30 | 98,80 | 0,90 | 97,70 | 126,00 | 2,30 | 4784,00 | 120,20 |
| 1,00 | 98,10 | 0,90 | 95,50 | 147,70 | 4,50 | 5371,00 | 163,20 |
| 2,50 | 96,60 | 0,90 | 86,4* | 165,80 | 6,70 | 5184,00 | 161,70 |
| 5,00 | 94,10 | 0,90 | 42,5* | 184,50 | 50,60 | 2182,00 | 245,50 |
| 10,00 | 89,10 | 0,90 | 0,00 | 0,00 | 100,00 | 1553,00 | 1144,00 |
| 40,00 | 59,10 | 0,90 | 81,8* | 150,40 | 4,60 | 5364,00 | 139,60 |
| 60,00 | 39,10 | 0,90 | 60,00 | 123,30 | 40,00 | 2422,00 | 183,40 |
| 80,00 | 19,10 | 0,90 | 42,10 | 36,44 | 57,90 | 993,70 | 80,73 |

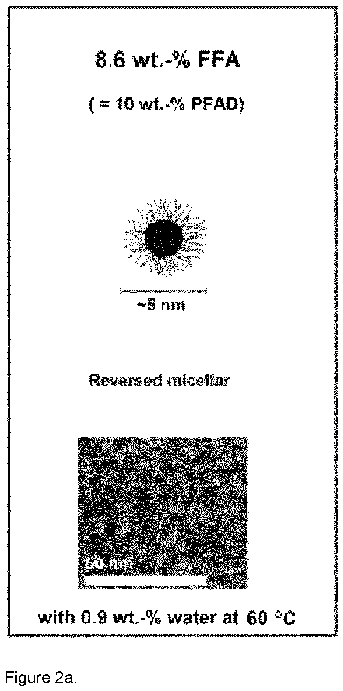

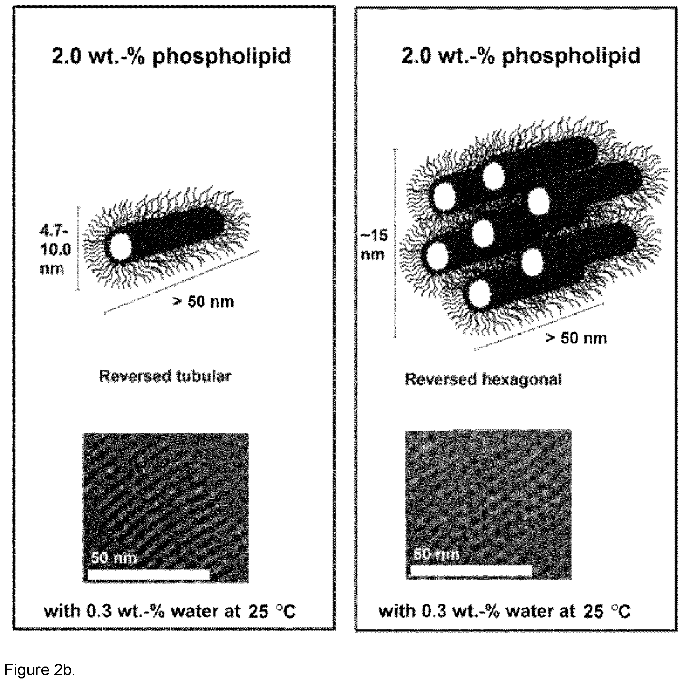

Cryo-TEM images (all results not shown, see figure 2) indicated that very large number of small spherical particles was present at both PFAD concentrations 10.0 wt.-% and 20.0 wt.-% in rapeseed oil. These particles had a diameter of ~5 nm. Particles seemed to be unevenly distributed and no structural regularity was seen among them (verified using Fast Fourier Transform of the image).

### Discussion on results of Example 1

Both lecithin and PFAD seemed to have an effect on particle size in rapeseed oil. This indicates that both hydratable phospholipids and FFAs can act as surface active agents in oil in the presence of small amounts of water (0.3 wt.-% and 0.9 wt.-%, respectively). The change in the particle size was most likely caused by the formation of liquid crystal structures caused by the self-association of surfactants. Liquid crystal structures seemed to increase the particle size of fats and oils as surfactants aggregated into larger structures rather than remained as free monomers in the oil phase.

In mixtures of triglycerides and FFAs, the particle size increased from initial 108 nm up to 2422 nm when the PFAD concentration increased from 0.0 wt.% to 60.0 wt-.%. At 80.0 wt-.% it seemed to again decrease. Increase in the particle size was probably caused by the formation of FFA liquid crystal structures in oil. The background was measured and observed in the reference sample 0 % PFAD. The largest particles (amount-wise) were present at 5 wt.-% and 10 wt.-% PFAD concentrations. Larger particles were also present at PFAD concentrations 60 wt.-% and 80 wt.-% but their amount was much lower (40 % and 57.9 %, respectively). This indicates that an increase of PFAD concentration to 40 wt.-% decreased the particle size. Without being bound to a theory, this may be caused by the change of continuous phase from rapeseed oil to PFAD. However, other properties of PFAD such as viscosity, pH or polarity through dissociation may further contribute to the decrease of particle size at 40.0 wt.-%.

Images obtained from cryo-TEM show somewhat similar results as particle size analysis. Firstly, it was observed that there were larger gummy like particles present with a diameter easily more than 10 µm (Results not shown) at 2 wt-% phospholipids. These may be explained by the formation of gums and harsh conditions of mixing which cut the gums into smaller pieces.

Sample materials were presumably relatively clean. However, by the looks of the greenish color of food grade rapeseed oil, it still contained some pigments such as chlorophylls. Moisture content was important factor in sample materials. Most of the sample materials contained some initial moisture. Micellar structures are known to be very eager to adsorb moisture which affects their size. The surface chemical phenomena have most likely an effect on the total purification efficiency since both hydratable phospholipids and FFAs seem to be able to act as surface active agents in oil in the presence of small amount of water (0.3 wt.-% and 0.9 wt.-%). This is an important factor as the amount of surfactants in purification is in most cases significant (phospholipids up to 3.5 % and FFAs up to 100 %, depending on the used feed stock). Surface activity may cause hydratable phospholipids and FFAs to form liquid crystal structures in oil. These structures seem to include phospholipid tubular and hexagonal structures and FFA spherical micelles. Aggregation of liquid crystal structures seems to increase the particle size from initial ~100 nm possibly up to 2400-5400 nm depending on the calculation method.

In the case of FFAs, the most populous particles were quite small (< 170 nm) between 0.0 to 2.15 wt.-% FFA concentrations (equal to 0.0 wt.-% and 2.5 wt.-% PFAD). After this, the particle size seemed to increase up to 2400-5400 nm, depending on the calculation method. The particle size seemed to be highest (amount-wise) at 4.3 wt.-%, and 8.6 wt.-% FFA concentrations (equal to 5.0 wt.-%, 10.0 wt.-%, PFAD, respectively). At these concentrations the particle size of most populous particles were 2182 nm and 1144 nm, respectively. After this, there seemed to be a drop in the particle size to 150 nm at 34.4 wt.-% FFA (equal to 40.0 wt.-% PFAD). At higher FFA concentration the particle size seemed to increase slightly and two populations (very small and very large) were present. However, particle size results were not similar to cryo-TEM-images results as they indicated that there was a large number of small spherical FFA particles present at 8.6 wt.-% FFA concentration (equal to 10 wt.-% PFAD). These particles were probably FFA reversed micelles and no indication of larger FFA crystals was seen in cryo-TEM-images.

Synergistic effects of phospholipids and FFAs were difficult to determine as a result of wide variation between the results. However, a small amount of phospholipids (0.3 wt.-%) seemed to have an effect on particle size of FFA in the oil. This may be caused by the change of CMC, mixed micellization or change in oil properties (such as pH).

### EXAMPLE 2

Mixtures of purified rapeseed oil and oleic acid (FFA) were prepared. 1 wt-% of commerical lecithin was added to them along with varying water amounts. Added lecithin and water mimic the true characteristics of the feedstock and inevitable impurities therein. The presence of micelles was detected with a TCNQ method. The TCNQ-dye (7,7,8,8-tetracyano-quino-dimethane), a component that turns coloured when it is solubilized in micelles, was added to samples (6 mg/6 g sample or 12 mg/12 g of sample). Samples were then agitated at room temperature for 5 hours using rotary agitator. After agitation, the excess TCNQ was removed using centrifugation at 800 g for 20 min. The absorbance spectra of the samples were measured from the upper phase using spectrophotometer with wavelength λ = 480 nm.

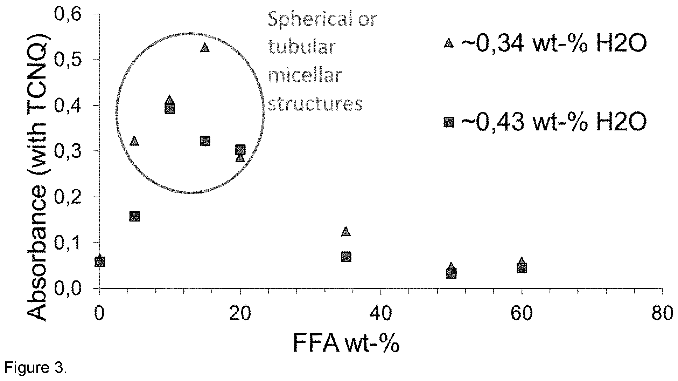

The absorbances are presented in Figure 3. The samples were also subjected to SAXS (Small angle X-ray scattering) measurements to identify what, if any, micellar structures were present in the samples. These results are summarized in Figure 3 as well.

It was discovered that without added oleic acid lamellar liquid crystals, which are separated from the liquid, are formed. Therefore there was practically no absorbance measured in the liquid phase due to solubilization. With higher oleic acid concentrations (already at 5 wt-% FFA) spherical or tubular micellar structures were formed, with a clear maximum seen at ~10 wt-% FFA. With even higher oleic acid concentrations, the absorbance started to go down and it was verified with SAXS measurements that micelles disappeared from the system marked by low absorbances at ~35 wt-% FFA and ~60 wt-% FFA. The absence of micellar structures even up 80 wt-% FFA opens very interesting possibilities for production of carbohydrates, espacially n-paraffins from natural fats and oils. The surprisingly detected disappearance of miselles explains easier filtration of the liquid in the presence of the higher FFA content. Figure 3 shows how the absorbance starts to decrease already at 15 %-wt of FFA for water content of 0,43 %-wt, and said trend is clearly seen for both water contents for FFA 20 %-wt.

## Claims

1. A method for producing hydrocarbons from a renewable oil feedstock, comprising the steps of
- subjecting the feedstock to a pretreatment process,
- subjecting said pretreated feedstock to a hydrotreatment process,
- obtaining hydrocarbons from said hydrotreatment process,
wherein said feedstock comprises free fatty acids from 15 wt-% to 50 wt-% of the total feedstock weight, and the rest being predominantly triglycerides.

2. The method according to claim 1, wherein said feedstock comprises free fatty acids from 20 wt-% to 50 wt-%, of the total feedstock weight, and the rest being predominantly triglycerides.

3. The method according to any of the preceding claims, wherein said pretreatment process comprises a filtration step.

4. The method according to any of the preceding claims, wherein said pretreatment process is a purification process for removing impurities such as phospholipids, metals and solids.

5. The method according to any of the preceding claims, wherein said hydrotreatment process is a catalytic hydrodeoxygenation process using a metal catalyst wherein said metal is selected from the group consisting of Fe, Pd, Pt, Ni, Mo, Co, Ru, Rh, W and any combination thereof.

6. The method according to claim 5, wherein the metal catalyst is supported on a support selected from alumina, silica and active carbon.

7. The method according to any of the preceding claims, wherein said feedstock is a mixture comprising
- vegetable oil, animal fat or a mixture thereof, and
- a free fatty acid stream selected from palm fatty acid distillate (PFAD), sludge palm oil (SPO), crude tall oil (CTO), crude fatty oil (CFO), tall oil fatty acid (TOFA), acid oils, free fatty acid side streams from oleochemistry, lauric fatty acid, palm kernel fatty acid, brown grease, and any mixture thereof.

8. Use of renewable oil in a hydrotreatment process for producing hydrocarbons, wherein said renewable oil contains free fatty acids from 15 wt-% to 50 wt-%, preferably from 20 to 50 %-wt, of the total feedstock weight and the rest is predominantly triglycerides, wherein said hydrotreatment process includes a pretreatment process.

9. The use according to claim 8, wherein said pretreatment process comprises a filtration step.

10. The use according to claim 8 or 9, wherein said pretreatment is a purification process for removing impurities such as phospholipids, metals and solids.
